(19) Europäisches Patentamt / European Patent Office / Office européen des brevets

(11) **EP 4 648 451 A1**

(12) **EUROPEAN PATENT APPLICATION**
published in accordance with Art. 153(4) EPC

(43) Date of publication:
**12.11.2025 Bulletin 2025/46**

(21) Application number: **23914084.1**

(22) Date of filing: **06.01.2023**

(51) International Patent Classification (IPC):
***H04W 8/24*** (2009.01)

(52) Cooperative Patent Classification (CPC):
**H04W 8/24**

(86) International application number:
**PCT/CN2023/071059**

(87) International publication number:
**WO 2024/145927 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GUO, Shengxiang
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **CAPABILITY REPORTING METHOD AND APPARATUS**

(57) Disclosed in the embodiments of the present disclosure are a capability reporting method and apparatus, which can be applied to the technical field of communications. The method, which is executed by means of a terminal device, comprises: reporting capability indication information to a network-side device, wherein the capability indication information is used for indicating the maximum switching time when a terminal device performs uplink switching in a specific switching mode, there are a plurality of switching schemes for the specific switching mode, and the maximum switching time is the maximum value in switching times required by the plurality of switching schemes. Thus, a terminal device can determine and report an accurate switching time, such that data transmission is prevented from being performed while uplink switching is performed, thereby effectively preventing a data transmission failure.

report capability indication information to a network side device, in which the capability indication information is used for indicating a maximum switching period for the terminal in performing an uplink switching using a specific switching mode, there are a plurality of switching schemes for the specific switching mode, and the maximum switching period is a maximum value among switching periods required for the plurality of switching schemes — S41

**FIG. 4**

## EP 4 648 451 A1

**Description**

**TECHNICAL FIELD**

The disclosure relates to the field of communication technologies, and in particular to a capability reporting method and a capability reporting devices.

**BACKGROUND**

In fifth Generation (5G) New Radio (NR), an uplink switching (so-called super uplink) function was introduced from Release 16 (Rel-16). The uplink switching may achieve a coordination between high and low frequencies.

**SUMMARY**

Embodiments of the disclosure provide capability reporting methods and capability reporting devices, by which a terminal may determine and report an accurate switching period, thereby avoiding perform data transmission and uplink switching at the same time, to effectively avoid data transmission failure.

In a first aspect, embodiments of the disclosure provides a capability reporting method, performed by a terminal, and the method includes: reporting, by the terminal, capability indication information to a network side device, in which the capability indication information is used for indicating a maximum switching period for the terminal in performing an uplink switching using a specific switching mode, there are a plurality of switching schemes for the specific switching mode, and the maximum switching period is a maximum value among switching periods required for the plurality of switching schemes.

In this technical solution, the terminal reports the capability indication information to the network side device, the capability indication information is used for indicating the maximum switching period for the terminal in performing the uplink switching using the specific switching mode. There are a plurality of switching schemes for the specific switching mode, and the maximum switching period is the maximum value among the switching periods required for the plurality of switching schemes. As a result, the terminal may determine and report an accurate switching period, thereby avoiding performing data transmission and the uplink switching at the same time, to effectively avoid the data transmission failure.

In a second aspect, embodiments of the disclosure provide another capability reporting method, performed by a network side device, and the method includes: receiving capability indication information reported by a terminal, in which the capability indication information is used for indicating a maximum switching period for the terminal in performing an uplink switching using a specific switching mode, there are a plurality of switching schemes for the specific switching mode, and the maximum switching period is a maximum value among switching periods required for the plurality of switching schemes.

In a third aspect, embodiments of the disclosure provide a communication device. The communication device has some or all of the functions of the terminal in the method described in the first aspect above. For example, the functions of the communication device may have some or all of the functions in the embodiments of the disclosure or may have the functions of implementing any one of the embodiments of the disclosure alone. The functions may be implemented by hardware or by hardware executing corresponding software. The hardware or software includes one or more units or modules corresponding to the above functions.

In one implementation, the structure of the communication device may include a transceiver module and a processing module. The processing module is configured to support the communication device to perform corresponding functions in the above methods. The transceiver module is configured to support communication between the communication device and other devices. The communication device may also include a storage module, which is coupled to the transceiver module and the processing module and stores computer programs and data necessary for the communication device.

In one implementation, the communication device includes: a transceiver module configured to report capability indication information to a network side device, in which the capability indication information is used for indicating a maximum switching time for a terminal in performing an uplink switching using a specific switching mode, there are a plurality of switching schemes for the specific switching mode, and the maximum switching period is a maximum value among switching periods required for the plurality of switching schemes.

In a fourth aspect, embodiments of the disclosure provide another communication device. The communication device has some or all the functions of the network side device in the method example described in the second aspect above. For example, the functions of the communication device may have some or all of the functions in the embodiments of the disclosure or may have the functions of implementing any one of the embodiments of the disclosure alone. The functions may be implemented by hardware or by hardware executing corresponding software. The hardware or software includes one or more units or modules corresponding to the above functions.

In one implementation, the structure of the communication device may include a transceiver module and a processing module. The processing module is configured to support the communication device to perform corresponding functions in the above method. The transceiver module is configured to support communication between the communication device and other devices. The communication device may also include a storage module, which is coupled to the transceiver module and the processing module and stores computer programs and data necessary for the communication device.

In one implementation, the communication device includes: a transceiver module configured to receive capability indication information reported by a terminal, in which the capability indication information is used for indicating a maximum switching period for the terminal device in performing an uplink switching using a specific switching mode, there are a plurality of switching schemes for the specific switching mode, and the maximum switching period is a maximum value among switching periods required for the plurality of switching schemes.

In a fifth aspect, embodiments of the disclosure provide a communication device including a processor. When the processor calls a computer program in a memory, the method described in the first aspect above is executed.

In a sixth aspect, embodiments of the disclosure provide a communication device including a processor. When the processor calls a computer program in a memory, the method described in the second aspect above is executed.

In a seventh aspect, embodiments of the disclosure provide a communication device, including a processor and a memory, in which the memory has a computer program stored thereon. The processor is configured to execute the computer program stored in the memory to cause the communication device to perform the method described in the first aspect above.

In an eighth aspect, embodiments of the disclosure provide a communication device, including a processor and a memory, in which the memory has a computer program stored thereon. The processor is configured to execute the computer program stored in the memory to cause the communication device to perform the method described in the second aspect above.

In a ninth aspect, embodiments of the disclosure provide a communication device, including a processor and an interface circuit, in which the interface circuit is configured to receive code instructions and transmit the code instructions to the processor, and the processor is configured to run the code instructions to enable the device to perform the method described in the first aspect above.

In a tenth aspect, embodiments of the disclosure provides a communication device, including a processor and an interface circuit, in which the interface circuit is configured to receive code instructions and transmit the code instructions to the processor, and the processor is configured to run the code instructions to enable the device to perform the method described in the second aspect above.

In an eleventh aspect, embodiments of the disclosure provide a capability reporting system. The system includes the communication device described in the third aspect and the communication device described in the fourth aspect, the system includes the communication device described in the fifth aspect and the communication device described in the sixth aspect, the system includes the communication device described in the seventh aspect and the communication device described in the eighth aspect, or the system includes the communication device described in the ninth aspect and the communication device described in the tenth aspect above.

In a twelfth aspect, embodiments of the disclosure provide a computer-readable storage medium for storing instructions usable by the above-mentioned terminal. When the instructions are executed, the terminal is caused to perform the method described in the first aspect above.

In a thirteenth aspect, embodiments of the disclosure provide a readable storage medium for storing instructions usable by the above-mentioned network side device. When the instructions are executed, the network side device is caused to perform the method described in the described second aspect above.

In a fourteenth aspect, the disclosure further provides a computer program product including a computer program. When the computer program is executed on a computer, the computer is caused to perform the method described in the first aspect above.

In a fifteenth aspect, the disclosure further provides a computer program product including a computer program. When the computer program is executed on a computer, the computer is enabled to perform the method described in the second aspect above.

In a sixteenth aspect, the disclosure provides a chip system. The chip system includes at least one processor and an interface and is configured to support a terminal to implement the functions involved in the first aspect, for example, determining or processing at least one of the data or information involved in the above methods. In a possible design, the chip system also includes a memory. The memory is configured to store computer programs and data necessary for the terminal. The chip system may be composed of chips or may include a chip and other discrete devices.

In a seventeenth aspect, the disclosure provides a chip system. The chip system includes at least one processor and an interface and is configured to support a network side device to implement the functions involved in the second aspect, for example, determining or processing at least one of the data or information involved in the above method. In a possible design, the chip system also includes a memory. The memory is configured to store computer programs and data necessary for the network side device. The chip system may be composed of a chip or may include a chip and other discrete devices.

In an eighteenth aspect, the disclosure provides a computer program, which, when executed on a computer, enables the computer to perform the method described in the first aspect above.

In a nineteenth aspect, the disclosure provides a computer program which, when executed on a computer, enables the computer to perform the method described in the second aspect above.

## BRIEF DESCRIPTION OF THE DRAWINGS

In order to more clearly illustrate technical solutions in the embodiments of the disclosure or the background art, the drawings required for use in the embodiments of the disclosure or the background art will be described below.

FIG. 1 is a diagram illustrating an architecture of a communication system according to an embodiment of the disclosure.

FIG. 2 is a schematic diagram illustrating an uplink switching scenario according to an embodiment of the disclosure.

FIG. 3 is a schematic diagram illustrating another uplink switching scenario according to an embodiment of the disclosure.

FIG. 4 is a flow chart illustrating a capability reporting method according to an embodiment of the disclosure.

FIG. 5 is a flow chart illustrating another capability reporting method according to an embodiment of the disclosure.

FIG. 6 is a flow chart illustrating another capability reporting method according to an embodiment of the disclosure.

FIG. 7 is a flow chart illustrating another capability reporting method according to an embodiment of the disclosure.

FIG. 8 is a structural diagram illustrating a communication device according to an embodiment of the disclosure.

FIG. 9 is a structural diagram illustrating another communication device according to an embodiment of the disclosure.

FIG. 10 is a schematic diagram illustrating a structure of a chip according to an embodiment of the disclosure.

## DETAILED DESCRIPTION

In order to better understand capability reporting methods and capability reporting devices described in embodiments of the disclosure, a communication system to which the embodiments of the disclosure are applicable is first described below.

Embodiments of the disclosure are described in detail below and examples of the embodiments are shown in the accompanying drawings, in which the same or similar reference numerals throughout represent the same or similar elements or elements having the same or similar functions. The embodiments described below with reference to the accompanying drawings are illustrative and are intended to be used to explain the disclosure and should not be construed as limitations on the disclosure. In the description of the disclosure, unless otherwise specified, "/" means "or". For example, "A/B" may mean "A or B". "And/or" in the disclosure is merely a description of an association relationship of associated objects, indicating that three relationships may exist. For example, "A and/or B" may mean: A exists alone, A and B exist at the same time, and B exists alone.

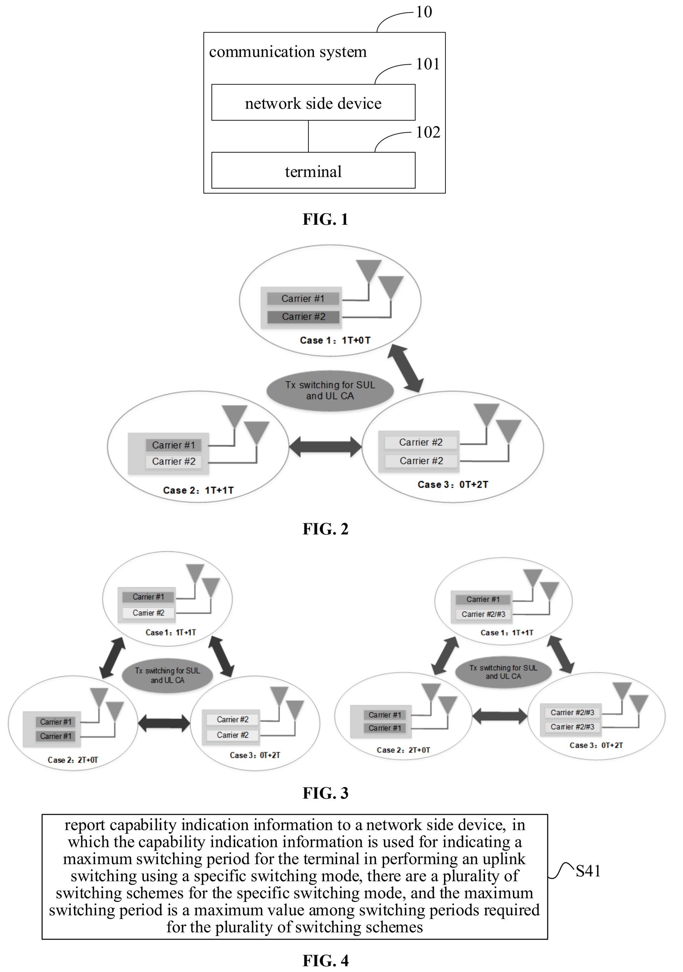

As illustrated in FIG. 1, which is a schematic diagram illustrating the architecture of a communication system according to an embodiment of the disclosure. The communication system may include, but is not limited to, one network side device and one terminal. The number and form of devices illustrated in FIG. 1 are only used as examples and do not constitute a limitation on the embodiments of the disclosure. In actual applications, two or more network side devices and two or more terminals may be included. The communication system 10 illustrated in FIG. 1 includes, for example, a network side device 101 and a terminal 102.

It should be noted that the technical solutions of the embodiments of the disclosure may be applied to various communication systems, such as long-term evolution (LTE) system, fifth generation (5G) mobile communication system, 5G new radio (NR) system, or other future new mobile communication systems.

The network side device 101 in the embodiments of the disclosure is an entity on a network side for transmitting or receiving signals. For example, the network side device 101 may be an evolved NodeB (eNB), a transmission reception point (TRP), a next generation NodeB (gNB) in an NR system, a base station in other future mobile communication systems, or an access node in a wireless fidelity (Wi-Fi) system. The embodiments of the disclosure do not limit the specific technology and specific device form adopted by the network side device 101. The network side device 101 according to the embodiments of the disclosure may be composed of a centralized unit (CU) and a distributed unit (DU). The CU may also be referred to as a control unit. The CU-DU structure may be used to split the network side device 101, such as the protocol layer of the network side device 101, the functions of some protocol layers are placed in the CU for centralized control, the functions of the remaining part or all of the protocol layers are distributed in the DU, and the DU is centrally controlled by the CU.

The terminal 102 in the embodiments of the disclosure is an entity on a user side for receiving or transmitting signals, such as a mobile phone. The terminal may also be referred to as a user equipment (UE) terminal, a mobile station (MS), a mobile terminal device (MT), etc. The terminal may be a vehicle with a communication function, a smart vehicle, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the disclosure do not limit the specific technology and specific device form adopted by the terminal.

It may be understood that the communication system described in the embodiments of the disclosure is for the purpose of more clearly illustrating the technical solutions of the embodiments of the disclosure and does not constitute a limitation on the technical solutions according to the embodiments of the disclosure. A person skilled in the art may know that with the evolution of the system architecture and the emergence of new business scenarios, the technical solutions according to the embodiments of the disclosure are also applicable to similar technical problems.

In addition, to facilitate understanding of the embodiments of the disclosure, the following explanations are provided.

First, in the embodiments of the disclosure, "used for indicating" may include being used for indicating directly or indirectly. For a feature "information is used for indicating A", the meaning may include that the information carries A. Or the meaning may include that the information directly indicates A or indirectly indicates A, but it does not mean that the information must carry A.

Information indicated by another information is called "information to be indicated". In the specific implementation process, there are many ways to indicate the information to be indicated, including for example but not limited to, directly indicating the information to be indicated, such as the information to be indicated itself or an index of the information to be indicated. The information to be indicated may also be indirectly indicated by indicating other information and there is an association between the other information and the information to be indicated. It is also possible to indicate only part of the information to be indicated, while the other parts of the information to be indicated are known or agreed in advance. For example, the indication of certain information may be achieved by means of an arrangement order of each information agreed in advance (such as specified by a protocol), thereby reducing an indication overhead to a certain extent.

The information to be indicated may be sent as a whole or divided into multiple sub-information and sent separately, and the sending periods and/or sending timings of the sub-information may be the same or different. The specific sending method is not limited in the disclosure. The sending periods and/or sending timings of the sub-information may be pre-defined, for example, pre-defined based on a protocol.

Second, in the disclosure, the "first", "second" and various numerical numbers (e.g., "#1", "#2") are only used for the convenience of description and are not used to limit the scope of the embodiments of the disclosure. For example, they are used to distinguish different information.

Third, the embodiments of the disclosure list multiple implementation methods to clearly illustrate the technical solutions of the embodiments of the disclosure. Certainly, those skilled in the art may understand that the multiple embodiments according to the disclosure may be executed separately, may be executed together with the methods of other embodiments according to disclosure, or may be executed together with some methods in other related arts separately or in combination. The above is not limited in the embodiments of the disclosure.

In fifth generation (5G) new radio (NR), an uplink switching (so-called "super uplink") function was introduced starting from Release 16 (Rel-16). The introduction of this function is intended to provide uplink transmission performance of uplink frequency band combinations, including E-UTRA NR dual connectivity (EN-DC), carrier aggregation (CA) and supplementary uplink (SUL). This function may achieve high and low frequency coordination through uplink switching, that is, when an uplink coverage of a high-frequency carrier is insufficient, it switches to a low-frequency carrier to improve an uplink coverage capability. When the uplink coverage is sufficient, the large bandwidth of the high-frequency carrier and the multiple input multiple output (MIMO) technology are used to achieve high-speed transmission. The related art only supports the uplink switching between two frequency bands and the terminal generally reports its own capability including which two frequency bands may support the uplink switching, a switching period, and a frequency band where a downlink terminal is located. In detail, the uplink switching scenarios introduced by Release 16 (Rel-16) and Release 17 (Rel-17) are illustrated in FIGS. 2 and 3, respectively.

FIG. 2 illustrates an uplink switching scenario in Rel-16 and FIG. 3 illustrates an uplink switching scenario in Rel-17, where "carrier #2#3" denotes an intra-band carrier aggregation (intra-band AC).

In performing the uplink switching by the terminal, since carrier frequencies of two links are close or due to a presence of interference, such as harmonics, or potential reasons, such as sharing some components, when one link is switched, the other link will be interfered. For the terminal with lower capabilities, the link that has not been switched or on which the switching process has been completed generally does not perform transmission when the other link is switched, which may effectively reduce the interference between these two links. When the uplink switching occurs for four or more frequency bands, there is a switching scenario between an inter-band carrier aggregation (inter-band CA) and another inter-band CA (without any overlapped frequency bands). In this scenario, it is difficult to determine a mapping for a switching frequency band pair on each link, which may cause that a period in which the terminal within lower capabilities does not perform the transmission on an interfered link is short.

To circumvent this potential problem, the disclosure provides a method for reporting a maximum multi-band uplink switching period. For example, for the switching between an inter-band CA and another inter-band CA (such as, CA_A-B<->CA_C-D), possible switching scenarios include A<->C, B<->D or A<->D, B<->C, and the respective switching period reported for each band pair may be different. Since the mapping of the link switching between two inter-band CAs is uncertain, it is necessary to select a maximum value among switching periods of all band pairs as a period (including a switching period of the interfered link itself) in which the interfered link does not perform the transmission, so as to effectively avoid the interference between links caused by the switching.

For example, the method for reporting the maximum multi-band uplink switching period is as follows:

```
bandIndexUL1-r16              INTEGER(1..maxSimultaneousBands),
   bandIndexUL2-r16           INTEGER(1..maxSimultaneousBands),
   uplinkTxSwitchingPeriod-r16      ENUMERATED {n35us, n140us, n210us},
   uplinkTxSwitching-DL-Interruption-r16 BIT STRING (SIZE(1..maxSimultaneousBands)) OPTIONAL
}


ULTxSwitchingBandPair-v1700 ::=    SEQUENCE {
   uplinkTxSwitchingPeriod2T2T-r17    ENUMERATED {n35us, n140us, n210us}    OPTIONAL
}


UplinkTxSwitchingBandParameters-v1700 ::=    SEQUENCE {
   bandIndex-r17                 INTEGER(1..maxSimultaneousBands),
   uplinkTxSwitching2T2T-PUSCH-TransCoherence-r17 ENUMERATED {nonCoherent, fullCoherent}
OPTIONAL
}
```

In the related art, when a terminal performs the uplink switching using a switching mode, there may be multiple switching schemes for the adopted switching mode. Different switching schemes require different switching periods. How to report the switching period by the terminal is a problem to be solved. Moreover, if the switching period is not accurately determined, it may cause the terminal to perform the uplink switching and the data transmission at the same time. The switching will interfere with the data transmission and may cause a data transmission failure. This is also a problem to be solved urgently.

In view of this, in the embodiments of the disclosure, the terminal may report capability indication information to the network side device, in which the capability indication information is used for indicating a maximum switching time for the terminal in performing an uplink switching using a specific switching mode. There are multiple switching schemes for the specific switching mode, and the maximum switching period is a maximum value of the switching periods required for the multiple switching schemes. As a result, the terminal may determine and report the accurate switching period, thereby avoiding performing the data transmission and the uplink switching at the same time, to effectively avoid data transmission failure.

Capability reporting methods and capability reporting devices according to the present will be described in detail below with reference to the accompanying drawings.

FIG. 4 is a flow chart illustrating a capability reporting method according to an embodiment of the disclosure. As illustrated in FIG. 4, the method is performed by a terminal, and the method may include, but is not limited to, the following.

At S41, capability indication information is reported to a network side device, in which the capability indication information is used for indicating a maximum switching period for the terminal in performing an uplink switching using a specific switching mode, there are multiple switching schemes for the specific switching mode, and the maximum switching period is a maximum value among switching periods required for the multiple switching schemes.

In the embodiments of the disclosure, the terminal may report the capability indication information to the network side device. For example, the terminal may report the capability indication information to the network side device at any time before performing the uplink switching.

The capability indication information is used for indicating the maximum switching period for the terminal in performing the uplink switching using a specific switching mode, there are multiple switching schemes for the specific switching mode, and the maximum switching period is the maximum value among the switching periods required for the multiple switching schemes.

In examples, the specific switching mode may be switching from two frequency bands (e.g., frequency band #1 and frequency band #2) to another two frequency bands (e.g., frequency band #3 and frequency band #4). The switching schemes include Scheme 1: switching from frequency band #1 to frequency band #3 and switching from frequency band #2 to frequency band #4, and Scheme 2: switching from frequency band #1 to frequency band #4 and switching from frequency band #2 to frequency band #3.

In examples, the specific switching mode may be switching from three frequency bands (e.g., frequency band #1, frequency band #2, frequency band #3) to another three frequency bands (e.g., frequency band #4, frequency band #5, frequency band #6). There are many switching schemes, which are not listed one by one here.

Certainly, the above examples are for illustration only and the specific switching mode may be switching from one frequency band to at least two other frequency bands, switching from at least two frequency bands to one frequency band, switching from four frequency bands to four other frequency bands, and so on. The above is not limited in the embodiments of the disclosure.

In some embodiments, the specific switching mode is a switching mode supported by the terminal in performing the uplink switching on multiple frequency bands.

In the embodiments of the disclosure, the capability indication information is used for indicating the maximum switching period for the terminal in performing the uplink switching using a specific switching mode and the specific switching mode is a switching mode supported by the terminal in performing the uplink switching on multiple frequency bands.

In examples, the specific switching mode is a switching mode supported by the terminal in performing the uplink switching on two frequency bands. It is assumed that there are two frequency bands, namely frequency band #1 and frequency band #2.

The switching mode may include Mode 1: switching from frequency band #1 to frequency band #2, Mode 2: switching from frequency band #2 to frequency band #1.

In examples, the specific switching mode is a switching mode supported by the terminal in performing the uplink switching on more than two frequency bands. It is assumed that there are three frequency bands, namely frequency band #1, frequency band #2 and frequency band #3.

The switching mode may include Mode 1: switching from frequency band #1 to frequency band #2 and frequency band #3, Mode 2: switching from frequency band #2 to frequency band #1 and frequency band #3, Mode 3: switching from frequency band #3 to frequency band #1 and frequency band #2, Mode 4: switching from frequency band #1 and frequency band #2 to frequency band #3, Mode 5: switching from frequency band #1 and frequency band #3 to frequency band #2, Mode 6: switching from frequency band #2 and frequency band #3 to frequency band #1, and so on.

In examples, the specific switching mode is a switching mode supported by the terminal in performing the uplink switching on more than two frequency bands. It is assumed that there are four frequency bands, namely frequency band #1, frequency band #2, frequency band #3 and frequency band #4.

The switching mode may include Mode 1: switching from frequency band #1 and frequency band #2 to frequency band #3 and frequency band #4, Mode 2: switching from frequency band #1 and frequency band #3 to frequency band #2 and frequency band #4, Mode 3: switching from frequency band #1 and frequency band #4 to frequency band #2 and frequency band #3, Mode 4: switching from frequency band #2 and frequency band #3 to frequency band #1 and frequency band #4, Mode 5: switching from frequency band #2 and frequency band #4 to frequency band #1 and frequency band #3, Mode 6: switching from frequency band #3 and frequency band #4 to frequency band #1 and frequency band #2, Mode 7: switching from frequency band #1 to frequency band #2, frequency band #3 and frequency band #4, Mode 8: switching from frequency band #2 to frequency band #1, frequency band #3 and frequency band #4, Mode 9: switching from frequency band #3 to frequency band #1, frequency band #2, frequency band #4, Mode 10: switching from frequency band #4 to frequency band #1, frequency band #2 and frequency band #3, Mode 11: switching from frequency band #1, frequency band #2 and frequency band #3 to frequency band #4, Mode 12: switching from frequency band #1, frequency band #2 and frequency band #4 to frequency band #3, Mode 13: switching from frequency band #1, frequency band #3 and frequency band #4 to frequency band #2, Mode 14: switching from frequency band #2, frequency band #3 and frequency band #4 to frequency band #1, and so on.

In some embodiments, in a specific switching mode, the switching occurs between multiple target frequency bands in multiple frequency bands, and there is no overlap between the multiple target frequency bands.

In the embodiments of the disclosure, the terminal performs the uplink switching using a specific switching mode which may be a switching mode that the switching occurs between multiple target frequency bands in multiple frequency bands.

In the embodiments of the disclosure, the specific switching mode may also be used for indicating that there may be no overlap between the multiple target frequency bands in a case that the switching occurs between the multiple target frequency bands in multiple frequency bands.

In examples, in a specific switching mode, the switching occurs between two target frequency bands in two frequency bands. That is, the two frequency bands are the target frequency bands respectively.

In examples, in a specific switching mode, the switching occurs between two target frequency bands in three frequency bands. That is, the terminal may use two frequency bands of the three frequency bands as the target frequency bands.

In examples, in a specific switching mode, the switching occurs between three target frequency bands in three frequency bands. That is, the terminal may use three frequency bands of the three frequency bands as the target frequency bands.

In examples, in a specific switching mode, the switching occurs between four target frequency bands in four frequency bands. That is, the terminal may use four frequency bands of the four frequency bands as the target frequency bands.

In examples, in a specific switching mode, the switching occurs between four target frequency bands in five or more frequency bands. That is, the terminal may use four frequency bands of the five or more frequency bands as the target frequency bands.

In examples, in a specific switching mode, the switching occurs between five or more target frequency bands in five or more frequency bands. That is, the terminal may use five or more frequency bands of the five or more frequency bands as the target frequency bands.

In some embodiments, the specific switching mode is a switching mode supported by the terminal in performing the uplink switching on at least four frequency bands.

In embodiments of the disclosure, the capability indication information is used for indicating the maximum switching period for the terminal in performing the uplink switching using the specific switching mode and the specific switching mode is a switching mode supported by the terminal in performing the uplink switching on at least four frequency bands.

In examples, the specific switching mode is a switching mode supported by the terminal in performing the uplink switching on the at least four frequency bands. It is assumed that there are four frequency bands, namely, frequency band #1, frequency band #2, frequency band #3 and frequency band #4.

The switching mode may include Mode 1: switching from frequency band #1 and frequency band #2 to frequency band #3 and frequency band #4, Mode 2: switching from frequency band #1 and frequency band #3 to frequency band #2 and frequency band #4, Mode 3: switching from frequency band #1 and frequency band #4 to frequency band #2 and frequency band #3, Mode 4: switching from frequency band #2 and frequency band #3 to frequency band #1 and frequency band #4, Mode 5: switching from frequency band #2 and frequency band #4 to frequency band #1 and frequency band #3, Mode 6: switching from frequency band #3 and frequency band #4 to frequency band #1 and frequency band #2, Mode 7: switching from frequency band #1 to frequency band #2, frequency band #3 and frequency band #4, Mode 8: switching from frequency band #2 to frequency band #1, frequency band #3 and frequency band #4, Mode 9: switching from frequency band #3 to frequency band #1, frequency band #2 and frequency band #4, Mode 10: switching from frequency band #4 to frequency band #1, frequency band #2 and frequency band #3, Mode 11: switching from frequency band #1, frequency band #2 and frequency band #3 to frequency band #4, Mode 12: switching from frequency band #1, frequency band #2 and frequency band #4 to frequency band #3, Mode 13: switching from frequency band #1, frequency band #3 and frequency band #4 to frequency band #2, Mode 14: switching from frequency band #2, frequency band #3, frequency band #4 to frequency band #1, and so on.

The specific switching mode may be a switching mode supported by the terminal in performing the uplink switching the on at least four frequency bands and may be one or more of the switching modes in the above examples.

It should be noted that the above examples only take four frequency bands as examples, and the examples of switching modes are not exhaustive. The above examples are only for illustration. In the embodiments of the disclosure, the specific switching mode may also be a switching mode supported by the terminal in performing the uplink switching on five or more frequency bands. The above is not limited in the embodiments of the disclosure.

In some embodiments, in a specific switching mode, the switching occurs between four target frequency bands in at least four frequency bands, and there is no overlap between the four target frequency bands.

In examples, in a specific switching mode, the switching occurs between the four target frequency bands and the four target frequency bands are frequency band #1, frequency band #2, frequency band #3, and frequency band #4.

The used specific switching mode includes for example: switching from frequency band #1 and frequency band #2 to frequency band #3 and frequency band #4, switching from frequency band #1 and frequency band #3 to frequency band #2 and frequency band #4, switching between two frequency bands (e.g., frequency band #1, frequency band #3) and another two frequency bands (e.g., frequency band #2, frequency band #4), switching between two frequency bands (e.g., frequency band #2, frequency band #3) and another two frequency bands (e.g., frequency band #1, frequency band #4), and so on.

The maximum switching period for the terminal in performing the uplink switching using the specific switching mode may be, for example, a maximum switching period required for the terminal in performing the uplink switching by switching from frequency band #1 and frequency band #2 to frequency band #3 and frequency band #4, a maximum switching period required for the terminal in performing the uplink switching by switching from frequency band #1 and frequency band #3 to frequency band #2 and frequency band #4, a maximum switching period required for the terminal in performing the uplink switching by switching between two frequency bands (e.g., frequency band #1, frequency band #3) and another two frequency bands (e.g., frequency band #2, frequency band #4), or a maximum switching period required for the terminal in performing the uplink switching by switching between two frequency bands (e.g., frequency band #2, frequency band #3) and another two frequency bands (e.g., frequency band #1, frequency band #4).

It is understandable that there are multiple switching schemes for switching from two frequency bands to another two frequency bands. Taking the switching from frequency band #1 and frequency band #2 to frequency band #3 and frequency band #4 as an example, the switching scheme may be switching from frequency band #1 to frequency band #3 and switching from frequency band #2 to frequency band #4, or the switching scheme may be switching from frequency band #1 to frequency band #4 and switching from frequency band #2 to frequency band #3.

The maximum switching period required for switching from frequency band #1 and frequency band #2 to frequency band #3 and frequency band #4 may be a maximum value among switching periods required for all switching modes of switching from frequency band #1 and frequency band #2 to frequency band #3 and frequency band #4.

Certainly, if the used specific switching mode is switching between two frequency bands (e.g., frequency band #1, frequency band #3) and another two frequency bands (e.g., frequency band #2, frequency band #4), there are more switching modes, including for example switching from frequency band #1 to frequency band #2 and switching from frequency band #3 to frequency band #4, switching from frequency band #1 to frequency band #4 and switching from frequency band #3 to frequency band #2, switching from frequency band #2 to frequency band #1 and switching from frequency band #4 to frequency band #3, or switching from frequency band #4 to frequency band #1 and switching from frequency band #2 to frequency band #3.

In an example embodiment, the switching periods required for switching between two frequency bands (including switching from an original frequency band to another frequency band and switching from another frequency band to the original frequency band) may be the same. For example, the switching period required for switching from frequency band #1 to frequency band #3 and the switching period required for switching from frequency band #3 to frequency band #1 may be the same, and so on.

In some embodiments, the specific switching mode is also used for indicating that the switching occurs between a first frequency band group and a second frequency band group in four target frequency bands, the first frequency band group includes a first frequency band and a second frequency band, and the second frequency band group includes a third frequency band and a fourth frequency band.

In the embodiments of the disclosure, the specific switching mode also indicates that the switching occurs between a first frequency band group and a second frequency band group in four target frequency bands, the first frequency band group includes a first frequency band and a second frequency band, and the second frequency band group includes a third frequency band and a fourth frequency band.

In some embodiments, in a case that a period required for switching between the first frequency band and the third frequency band is a first period, a period required for switching between the first frequency band and the fourth frequency band is a second period, a period required for switching between the second frequency band and the third frequency band is a third period, and a period required for switching between the second frequency band and the fourth frequency band is a fourth period, the maximum switching period corresponding to the specific switching mode is the maximum value among the first period, the second period, the third period, and the fourth period.

In some embodiments, the capability indication information includes a bitmap.

In embodiments of the disclosure, the capability indication information includes a bitmap, in which bit(s) in the bitmap may indicate the specific switching mode supported by the terminal in performing the uplink switching on at least four frequency bands and the maximum switching period corresponding to the specific switching mode.

Certainly, the bitmap may also only indicate the specific switching mode supported by the terminal in performing the uplink switching on the at least four frequency bands. Or the bitmap may only indicate the maximum switching period corresponding to the specific switching mode supported by the terminal, and so on.

In the embodiments of the disclosure, before reporting the capability indication information to the network side device, the terminal may reach an agreement with the network side device on the meaning of the bitmap of the capability indication information.

The bitmap may include one or more bits, and the one or more bits may respectively indicate the same meaning or may also respectively indicate different meanings.

In examples, a first bit indicates the specific switching mode supported by the terminal in performing the uplink switching on the at least four frequency bands and a second bit is used to indicate the maximum switching period corresponding to the specific switching mode.

In some embodiments, different bits of the bitmap correspond to different switching modes.

In the embodiments of the disclosure, the bitmap may include multiple bits, in which different bits correspond to different switching modes respectively.

In examples, when the terminal performs the uplink switching on the at least four frequency bands, the switching mode includes switching between two frequency bands of the at least four frequency bands and two frequency bands other than the two frequency bands of the at least four frequency bands. There are multiple switching modes, and each bit of the bitmap may correspond to a respective switching mode.

In some embodiments, in a case that the terminal performs the uplink switching on m frequency bands, the number of bits in the bitmap is $(C_m^2 * C_{m-2}^2)/2$.

In the embodiments of the disclosure, the terminal performs the uplink switching on m frequency bands, and the number of bits in the bitmap is $(C_m^2 * C_{m-2}^2)/2$.

In some embodiments, in a case that the value of a bit is a first value, it indicates that the terminal supports a specific switching mode corresponding to the bit and/or in a case that the value of a bit is a second value, it indicates that the terminal does not support a switching mode corresponding to the bit.

In the embodiments of the disclosure, in a case that a value of a bit is a first value, it indicates that the terminal supports a specific switching mode corresponding to the bit, and the first value may be "1".

In the embodiments of the disclosure, in a case that a value of a bit is a second value, it indicates that the terminal does not support a switching mode corresponding to the bit, and the second value may be "0".

In some embodiments, in a case that there are multiple specific switching modes, an order of the maximum switching periods corresponding to the specific switching modes is consistent with an order of the bits corresponding to the specific switching modes.

In the embodiments of the disclosure, in a case that there are multiple specific switching modes, the order of the maximum switching periods corresponding to the specific switching modes is consistent with the order of the bits corresponding to the specific switching modes.

It should be noted that the above embodiments are not exhaustive but are only illustrations of some embodiments, and the above embodiments may be implemented individually or in combination. The above embodiments are only for illustration and are not intended to be specific limitations on the scope of protection of the embodiments of the disclosure.

By implementing the embodiments of the disclosure, the terminal reports the capability indication information to the network side device, in which the capability indication information is used for indicating the maximum switching period for the terminal in performing the uplink switching using the specific switching mode, there are multiple switching schemes for the specific switching mode, and the maximum switching period is the maximum value of the switching periods required for the multiple switching schemes. Thus, the terminal may determine and report the accurate switching period, thereby avoiding performing data transmission and the uplink switching at the same time, to effectively avoid data transmission failure.

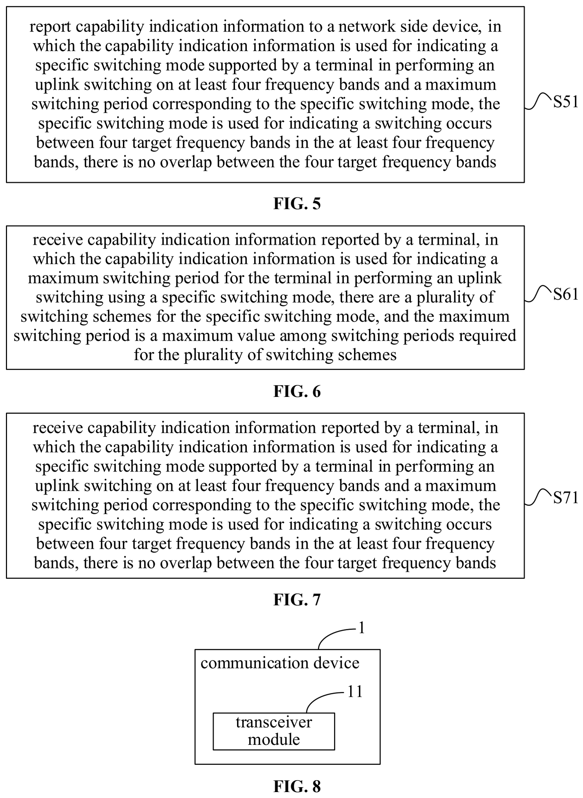

FIG. 5 is a flow chart illustrating another capability reporting method according to an embodiment of the disclosure. As illustrated in FIG. 5, the method is performed by a network side device, and the method may include, but is not limited to, the following.

At S51, capability indication information is reported to the network side device, in which the capability indication information is used for indicating a specific switching mode supported by the terminal in performing an uplink switching on at least four frequency bands and a maximum switching period corresponding to the specific switching mode, the specific switching mode is used for indicating that a switching occurs between four target frequency bands in the at least four frequency bands, and there is no overlap between the four target frequency bands.

In the embodiments of the disclosure, the terminal may report the capability indication information to the network side device, and the terminal may report the capability indication information to the network side device at any time before performing the uplink switching.

The capability indication information is used for indicating the specific switching mode supported by the terminal in performing the uplink switching on the at least four frequency bands and the maximum switching period corresponding to the specific switching mode, the specific switching mode is used for indicating that the switching occurs between the four target frequency bands in at least four frequency bands, and there is no overlap between the four target frequency bands.

In examples, the capability indication information indicates that the terminal performs the uplink switching on four frequency bands, namely frequency band #1, frequency band #2, frequency band #3 and frequency band #4.

The supported specific switching mode includes, for example, supporting switching from frequency band #1 and frequency band #2 to frequency band #3 and frequency band #4, supporting switching from frequency band #1 and frequency band #3 to frequency band #2 and frequency band #4, supporting switching between two frequency bands (e.g., frequency band #1, frequency band #3) and another two frequency bands (e.g., frequency band #2, frequency band #4), supporting switching between two frequency bands (e.g., frequency band #2, frequency band #3) and another two frequency bands (e.g., frequency band #1, frequency band #4), and so on.

The maximum switching period corresponding to the specific switching mode may be, for example, a maximum switching period required for switching from frequency band #1 and frequency band #2 to frequency band #3 and frequency band #4, a maximum switching period required for switching from frequency band #1 and frequency band #3 to frequency band #2 and frequency band #4, a maximum switching period required for supporting switching between two frequency bands (e.g., frequency band #1, frequency band #3) and another two frequency bands (e.g., frequency band #2, frequency band #4), or a maximum switching period required for supporting switching between two frequency bands (e.g., frequency band #2, frequency band #3) and another two frequency bands (e.g., frequency band #1, frequency band #4).

It is understandable that there are multiple switching modes for switching from two frequency bands to another two frequency bands. Taking the switching from frequency band #1 and frequency band #2 to frequency band #3 and frequency band #4 as an example, the switching mode may be switching from frequency band #1 to frequency band #3 and switching from frequency band #2 to frequency band #4, or switching frequency band #1 to frequency band #4 and switching from frequency band #2 to frequency band #3.

The maximum switching period required for switching from frequency band #1 and frequency band #2 to frequency band #3 and frequency band #4 may be a maximum value among switching periods required for all modes of switching from frequency band #1 and frequency band #2 to frequency band #3 and frequency band #4.

Certainly, in a case that the supported specific switching mode is switching between two frequency bands (e.g., frequency band #1, frequency band #3) and another two frequency bands (e.g., frequency band #2, frequency band #4), there are more switching modes including for example switching from frequency band #1 to frequency band #2 and switching from frequency band #3 to frequency band #4, switching from frequency band #1 to frequency band #4 and switching from frequency band #3 to frequency band #2, switching from frequency band #2 to frequency band #1 and switching from frequency band #4 to frequency band #3, or switching from frequency band #4 to frequency band #1 and switching from frequency band #2 to frequency band #3.

In example embodiments, the switching periods required for switching between two frequency bands (including switching from an original frequency band to another frequency band and switching from another frequency band to the original frequency band) may be the same. For example, the switching period required for switching from frequency band #1 to frequency band #3 and the switching period required for switching from frequency band #3 to frequency band #1 may be the same, and so on.

It should be noted that the above examples are only examples, and the capability indication information may also indicate that the terminal performs the uplink switching on 5 or more frequency bands, etc. The above is not limited in embodiments of the disclosure.

In some embodiments, the specific switching mode is also used for indicating that the switching occurs between a first frequency band group and a second frequency band group in the four target frequency bands, the first frequency band group includes a first frequency band and a second frequency band, and the second frequency band group includes a third frequency band and a fourth frequency band.

In the embodiments of the disclosure, the specific switching mode also indicates that the switching occurs between the first frequency band group and the second frequency band group in the four target frequency bands, the first frequency band group includes the first frequency band and the second frequency band, and the second frequency band group includes the third frequency band and the fourth frequency band.

In some embodiments, in a case that a period required for switching between the first frequency band and the third frequency band is a first period, a period required for switching between the first frequency band and the fourth frequency band is a second period, a period required for switching between the second frequency band and the third frequency band is a third period, and a period required for switching between the second frequency band and the fourth frequency band is a fourth period, the maximum switching period corresponding to the specific switching mode is the maximum value among the first period, the second period, the third period and the fourth period.

In some embodiments, the capability indication information includes a bitmap.

In embodiments of the disclosure, the capability indication information includes a bitmap and bit(s) in the bitmap may indicate the specific switching mode supported by the terminal in performing the uplink switching on the at least four frequency bands and the maximum switching period corresponding to the specific switching mode.

Certainly, the bitmap may only indicate a specific switching mode supported by the terminal in performing the uplink switching on the at least four frequency bands. Or the bitmap may only indicate the maximum switching period corresponding to a specific switching mode supported by the terminal, and so on.

In the embodiments of the disclosure, before reporting the capability indication information to the network side device, the terminal may reach an agreement with the network side device on the meaning of the bitmap of the capability indication information.

The bitmap may include one or more bits, and the one or more bits may each indicate the same meaning or may respectively indicate different meanings.

In examples, a first bit indicates the specific switching mode supported by the terminal in performing the uplink switching on the at least four frequency bands and a second bit is used for indicating the maximum switching period corresponding to the specific switching mode.

In some embodiments, different bits of the bitmap correspond to different switching modes respectively.

In the embodiments of the disclosure, the bitmap may include multiple bits, and different bits correspond to different switching modes respectively.

In examples, when the terminal performs the uplink switching on the at least four frequency bands, the switching mode includes switching between two frequency bands of the at least four frequency bands and two frequency bands other than the two frequency bands of the at least four frequency bands, there are multiple switching modes, and each bit of the bitmap may correspond to one respective switching mode.

In some embodiments, in a case that the terminal performs the uplink switching on m frequency bands, the number of bits in the bitmap is $(C_m^2 * C_{m-2}^2)/2$ .

In the embodiments of the disclosure, the terminal performs the uplink switching on m frequency bands, and the number of bits in the bitmap is $(C_m^2 * C_{m-2}^2)/2$ .

In some embodiments, in a case that a value of a bit is a first value, it indicates that the terminal supports a specific switching mode corresponding to the bit and/or in a case that a value of a bit is a second value, it indicates that the terminal does not support a switching mode corresponding to the bit.

In the embodiments of the disclosure, in a case that a value of a bit is a first value, it indicates that the terminal supports a specific switching mode corresponding to the bit, and the first value may be "1".

In the embodiments of the disclosure, in a case that a value of a bit is a second value, it indicates that the terminal does not support a switching mode corresponding to the bit, and the second value may be "0".

In some embodiments, in a case that there are multiple specific switching modes, an order of the maximum switching periods corresponding to the specific switching modes is consistent with an order of bits corresponding to the specific switching modes.

In the embodiments of the disclosure, in a case that there are multiple specific switching modes, an order of the maximum switching periods corresponding to the specific switching modes is consistent with an order of the bits corresponding to the specific switching modes.

By implementing the embodiments of the disclosure, the terminal reports the capability indication information to the network side device, in which the capability indication information is used for indicating the specific switching mode supported by the terminal in performing the uplink switching on the at least four frequency bands and the maximum switching period corresponding to the specific switching mode, the specific switching mode is used to indicate that the switching occurs between four target frequency bands in at least four frequency bands, and there is no overlap between the four target frequency bands. Thus, the terminal may determine and report the accurate switching period, thereby avoiding performing data transmission and the uplink switching at the same time, to effectively avoid data transmission failure.

FIG. 6 is a flow chart illustrating another capability reporting method according to an embodiment of the disclosure. As illustrated in FIG. 6, the method is performed by a network side device, and the method may include, but is not limited to, the following.

At S61, capability indication information reported by the terminal is received, in which the capability indication information is used for indicating a maximum switching period for the terminal in performing an uplink switching using a specific switching mode, there are multiple switching schemes for the specific switching mode, and the maximum switching period is a maximum value among switching periods required for the multiple switching schemes.

In the embodiments of the disclosure, the network side device may receive the capability indication information reported by the terminal. For example, the capability indication information reported by the terminal may be received at any time before the terminal performs the uplink switching.

The capability indication information is used for indicating the maximum switching period for the terminal in performing the uplink switching using a specific switching mode, there are multiple switching schemes for the specific switching mode, and the maximum switching period is the maximum value among the switching periods required by the multiple switching schemes.

In examples, the specific switching mode be switching from two frequency bands (e.g., frequency band #1 and frequency band #2) to another two frequency bands (e.g., frequency band #3 and frequency band #4). The switching schemes include Scheme 1: switching from frequency band #1 to frequency band #3 and switching from frequency band #2 to frequency band #4, and Scheme 2: switching from frequency band #1 to frequency band #4 and switching from frequency band #2 to frequency band #3.

In examples, the specific switching mode may be switching from three frequency bands (e.g., frequency band #1, frequency band #2, frequency band #3) to another three frequency bands (e.g., frequency band #4, frequency band #5, frequency band #6). There are many switching scheme s, which are not listed one by one here.

Certainly, the above examples are for illustration only, and the specific switching mode may be switching from one frequency band to at least two other frequency bands, switching from at least two frequency bands to one frequency band, switching from four frequency bands to four other frequency bands, and so on. The above is not limited in the embodiments of the disclosure.

In some embodiments, the specific switching mode is a switching mode supported by the terminal in performing the uplink switching on multiple frequency bands.

In the embodiments of the disclosure, the capability indication information is used for indicating the maximum switching period for the terminal in performing the uplink switching using a specific switching mode and the specific switching mode is a switching mode supported by the terminal in performing the uplink switching on multiple frequency bands.

In examples, the specific switching mode is a switching mode supported by the terminal in performing the uplink switching on two frequency bands. It is assumed that there are two frequency bands, namely frequency band #1 and frequency band #2.

The switching mode may include Mode 1: switching from frequency band #1 to frequency band #2, Mode 2: switching from frequency band #2 to frequency band #1.

In examples, the specific switching mode is a switching mode supported by the terminal in performing the uplink switching on more than two frequency bands. It is assumed that there are three frequency bands, namely frequency band #1, frequency band #2 and frequency band #3.

The switching mode may include Mode 1: switching from frequency band #1 to frequency band #2 and frequency band #3, Mode 2: switching from frequency band #2 to frequency band #1 and frequency band #3, Mode 3: switching from frequency band #3 to frequency band #1 and frequency band #2, Mode 4: switching from frequency band #1 and frequency band #2 to frequency band #3, Mode 5: switching from frequency band #1 and frequency band #3 to frequency band #2, Mode 6: switching from frequency band #2 and frequency band #3 to frequency band #1, and so on.

In examples, the specific switching mode is a switching mode supported by the terminal in performing the uplink switching on more than two frequency bands. It is assumed that there are four frequency bands, namely frequency band #1, frequency band #2, frequency band #3 and frequency band #4.

The switching mode may include Mode 1: switching from frequency band #1 and frequency band #2 to frequency band #3 and frequency band #4, Mode 2: switching from frequency band #1 and frequency band #3 to frequency band #2 and frequency band #4, Mode 3: switching from frequency band #1 and frequency band #4 to frequency band #2 and frequency band #3, Mode 4: switching from frequency band #2 and frequency band #3 to frequency band #1 and frequency band #4, Mode 5: switching from frequency band #2 and frequency band #4 to frequency band #1 and frequency band #3, Mode 6: switching from frequency band #3 and frequency band #4 to frequency band #1 and frequency band #2, Mode 7: switching from frequency band #1 to frequency band #2, frequency band #3 and frequency band #4, Mode 8: switching from frequency band #2 to frequency band #1, frequency band #3 and frequency band #4, Mode 9: switching from frequency band #3 to frequency band #1, frequency band #2, frequency band #4, Mode 10: switching from frequency band #4 to frequency band #1, frequency band #2 and frequency band #3, Mode 11: switching from frequency band #1, frequency band #2 and frequency band #3 to frequency band #4, Mode 12: switching from frequency band #1, frequency band #2 and frequency band #4 to frequency band #3, Mode 13: switching from frequency band #1, frequency band #3 and frequency band #4 to frequency band #2, Mode 14: switching from frequency band #2, frequency band #3 and frequency band #4 to frequency band #1, and so on.

In some embodiments, in a specific switching mode, the switching occurs between multiple target frequency bands in multiple frequency bands, and there is no overlap between the multiple target frequency bands.

In the embodiments of the disclosure, the terminal adopts a specific switching mode to perform the uplink switching and the specific switching mode may be a switching mode that the switching occurs between multiple target frequency bands in multiple frequency bands.

In examples, in a specific switching mode, the switching occurs between two target frequency bands in two frequency bands. That is, the two frequency bands are the target frequency bands respectively.

In examples, in a specific switching mode, the switching occurs between two target frequency bands in three frequency bands. That is, the terminal may use two frequency bands of the three frequency bands as the target frequency bands.

In examples, in a specific switching mode, the switching occurs between three target frequency bands in three frequency bands. That is, the terminal may use three frequency bands of the three frequency bands as the target frequency bands.

In examples, in a specific switching mode, the switching occurs between four target frequency bands in four frequency bands. That is, the terminal may use four frequency bands of the four frequency bands as the target frequency bands.

In examples, in a specific switching mode, the switching occurs between four target frequency bands in five or more frequency bands. That is, the terminal may use four frequency bands of the five or more frequency bands as the target frequency bands.

In examples, in a specific switching mode, the switching occurs between five or more target frequency bands in five or more frequency bands. That is, the terminal may use five or more frequency bands of the five or more frequency bands as the target frequency bands.

In some embodiments, the specific switching mode is a switching mode supported by the terminal in performing the uplink switching on at least four frequency bands.

In embodiments of the disclosure, the capability indication information is used for indicating the maximum switching period for the terminal in performing the uplink switching using the specific switching mode and the specific switching mode is a switching mode supported by the terminal in performing the uplink switching on at least four frequency bands.

In some embodiments, in a specific switching mode, the switching occurs between four target frequency bands in the at least four frequency bands and there is no overlap between the four target frequency bands.

In examples, in a specific switching mode, the switching occurs between the four target frequency bands, and the four target frequency bands are frequency band #1, frequency band #2, frequency band #3, and frequency band #4.

The used specific switching mode includes for example: switching from frequency band #1 and frequency band #2 to frequency band #3 and frequency band #4, switching from frequency band #1 and frequency band #3 to frequency band #2 and frequency band #4, switching between two frequency bands (e.g., frequency band #1, frequency band #3) and another two frequency bands (e.g., frequency band #2 and frequency band #4), switching between two frequency bands (e.g., frequency band #2, frequency band #3) and another two frequency bands (e.g., frequency band #1, frequency band #4), and so on.

The maximum switching period for the terminal in performing the uplink switching using the specific switching mode may be for example: a maximum switching period required for the terminal in performing the uplink switching by switching from frequency band #1 and frequency band #2 to frequency band #3 and frequency band #4, a maximum switching period required for the terminal in performing the uplink switching by switching from frequency band #1 and frequency band #3 to frequency band #2 and frequency band #4, a maximum switching period required for the terminal in performing the uplink switching by switching between two frequency bands (e.g., frequency band #1, frequency band #3) and another two frequency bands (e.g., frequency band #2, frequency band #4), or a maximum switching period required for the terminal in performing the uplink switching by switching between two frequency bands (e.g., frequency band #2, frequency band #3) and another two frequency bands (e.g., frequency band #1, frequency band #4).

It is understandable that there are multiple switching schemes for switching from two frequency bands to another two frequency bands. Taking the switching from frequency band #1 and frequency band #2 to frequency band #3 and frequency band #4 as an example, the switching scheme may be switching from frequency band #1 to frequency band #3 and switching from frequency band #2 to frequency band #4, or the switching scheme may be switching from frequency band #1 to frequency band #4 and switching from frequency band #2 to frequency band #3.

The maximum switching period required for switching from frequency band #1 and frequency band #2 to frequency band #3 and frequency band #4 may be a maximum value among switching periods required for all switching modes of switching from frequency band #1 and frequency band #2 to frequency band #3 and frequency band #4.

Certainly, if the used specific switching mode is switching between two frequency bands (e.g., frequency band #1 and frequency band #3) and another two frequency bands (e.g., frequency band #2 and frequency band #4), there are more switching modes, including for example switching from frequency band #1 to frequency band #2 and switching from frequency band #3 to frequency band #4, switching from frequency band #1 to frequency band #4 and switching from frequency band #3 to frequency band #2, switching from frequency band #2 to frequency band #1 and switching from frequency band #4 to frequency band #3, or switching from frequency band #4 to frequency band #1 and switching from frequency band #2 to frequency band #3.

In an example embodiment, the switching periods required for switching between two frequency bands (including switching from an original frequency band to another frequency band and switching from another frequency band to the original frequency band) may be the same. For example, the switching period required for switching from frequency band #1 to frequency band #3 and the switching period required for switching from frequency band #3 to frequency band #1 may be the same, and so on.

In some embodiments, the specific switching mode is also used for indicating that the switching occurs between a first frequency band group and a second frequency band group of four target frequency bands, the first frequency band group includes a first frequency band and a second frequency band, and the second frequency band group includes a third frequency band and a fourth frequency band.

In the embodiments of the disclosure, the specific switching mode also indicates that the switching occurs between the first frequency band group and the second frequency band group in four target frequency bands, the first frequency band group includes a first frequency band and a second frequency band, and the second frequency band group includes a third frequency band and a fourth frequency band.

In some embodiments, in a case that a period required for switching between the first frequency band and the third frequency band is a first period, a period required for switching between the first frequency band and the fourth frequency band is a second period, a period required for switching between the second frequency band and the third frequency band is a third period, and a period required for switching between the second frequency band and the fourth frequency band is a fourth period, the maximum switching period corresponding to the specific switching mode is the maximum value among the first period, the second period, the third period, and the fourth period.

In some embodiments, the capability indication information includes a bitmap.

In embodiments of the disclosure, the capability indication information includes a bitmap, in which bit(s) in the bitmap may indicate the specific switching mode supported by the terminal in performing the uplink switching on at least four frequency bands and the maximum switching period corresponding to the specific switching mode.

Certainly, the bitmap may also only indicate the specific switching mode supported by the terminal in performing the uplink switching on the at least four frequency bands. Or the bitmap may only indicate the maximum switching period corresponding to the specific switching mode supported by the terminal device, and so on.

In the embodiments of the disclosure, before reporting the capability indication information to the network side device, the terminal may reach an agreement with the network side device on the meaning of the bitmap of the capability indication information.

The bitmap may include one or more bits, and the one or more bits may respectively indicate the same meaning or may also respectively indicate different meanings.

In examples, a first bit indicates the specific switching mode supported by the terminal in performing the uplink switching on the at least four frequency bands and a second bit is used to indicate the maximum switching period corresponding to the specific switching mode.

In some embodiments, different bits of the bitmap correspond to different switching modes.

In the embodiments of the disclosure, the bitmap may include multiple bits, in which different bits correspond to different switching modes respectively.

In examples, when the terminal performs the uplink switching on the at least four frequency bands, the switching mode includes switching between two frequency bands of the at least four frequency bands and two frequency bands other than the two frequency bands of the at least four frequency bands. There are multiple switching modes, and each bit of the bitmap may correspond to a respective switching mode.

In some embodiments, in a case that the terminal performs the uplink switching on m frequency bands, the number of bits in the bitmap is $(C_{\mathrm{m}}^{2} * C_{m-2}^{2})/2$.

In the embodiments of the disclosure, the terminal performs the uplink switching on m frequency bands, and the number of bits in the bitmap is $(C_{\mathrm{m}}^{2} * C_{m-2}^{2})/2$.

In some embodiments, in a case that the value of a bit is a first value, it indicates that the terminal supports a specific switching mode corresponding to the bit and/or in a case that the value of a bit is a second value, it indicates that the terminal does not support a switching mode corresponding to the bit.

In the embodiments of the disclosure, in a case that a value of a bit is a first value, it indicates that the terminal supports a specific switching mode corresponding to the bit, and the first value may be "1".

In the embodiments of the disclosure, in a case that a value of a bit is a second value, it indicates that the terminal does not support a switching mode corresponding to the bit, and the second value may be "0".

In some embodiments, in a case that there are multiple specific switching modes, an order of the maximum switching periods corresponding to the specific switching modes is consistent with an order of the bits corresponding to the specific switching modes.

In the embodiments of the disclosure, in a case that there are multiple specific switching modes, the order of the maximum switching periods corresponding to the specific switching modes is consistent with the order of the bits corresponding to the specific switching modes.

It should be noted that the above embodiments are not exhaustive but are only illustrations of some embodiments, and the above embodiments may be implemented individually or in combination. The above embodiments are only for illustration and are not intended to be specific limitations on the scope of protection of the embodiments of the disclosure.

By implementing the embodiments of the disclosure, the network side device receives the capability indication information reported by the terminal, in which the capability indication information is used for indicating the maximum switching period for the terminal in performing the uplink switching using the specific switching mode, there are multiple switching schemes for the specific switching mode, and the maximum switching period is the maximum value among switching periods required for the multiple switching schemes. Thus, the terminal may determine and report the accurate switching period, thereby avoiding performing data transmission and the uplink switching at the same time, to effectively avoid data transmission failure.

FIG, 7 is a flow chart illustrating another capability reporting method according to an embodiment of the disclosure. As illustrated in FIG. 7, the method is performed by a network side device, and the method may include, but is not limited to, the following.

At S71, capability indication information reported by a terminal is received, in which the capability indication information is used for indicating a specific switching mode supported by the terminal in performing an uplink switching on at least four frequency bands and a maximum switching period corresponding to the specific switching mode, and the specific switching mode is used for indicating that a switching occurs between four target frequency bands in the at least four frequency bands, and there is no overlap between the four target frequency bands.

In the embodiments of the disclosure, the network side device may receive the capability indication information reported by the terminal, and the capability indication information reported by the terminal may be received at any time before the terminal performs the uplink switching.

The capability indication information is used for indicating the specific switching mode supported by the terminal in performing the uplink switching on the at least four frequency bands and the maximum switching period corresponding to the specific switching mode, the specific switching mode is used for indicating that the switching occurs between four target frequency bands in the at least four frequency bands, and there is no overlap between the four target frequency bands.

In examples, the capability indication information indicates that the terminal performs the uplink switching on four frequency bands, and the four frequency bands are frequency band #1, frequency band #2, frequency band #3 and frequency band #4.

The supported specific switching mode includes, for example, supporting switching from frequency band #1 and frequency band #2 to frequency band #3 and frequency band #4, supporting switching from frequency band #1 and frequency band #3 to frequency band #2 and frequency band #4, supporting switching between two frequency bands (e.g., frequency band #1, frequency band #3) and another two frequency bands (e.g., frequency band #2, frequency band #4), supporting switching between two frequency bands (e.g., frequency band #2, frequency band #3) and another two frequency bands (e.g., frequency band #1, frequency band #4), and so on.

The maximum switching period corresponding to the specific switching mode may be, for example, a maximum switching period required for switching from frequency band #1 and frequency band #2 to frequency band #3 and frequency band #4, a maximum switching period required for switching from frequency band #1 and frequency band #3 to frequency band #2 and frequency band #4, a maximum switching period required for supporting switching between two frequency bands (e.g., frequency band #1, frequency band #3) and another two frequency bands (e.g., frequency band #2, frequency band #4), or a maximum switching period required for supporting switching between two frequency bands (e.g., frequency band #2, frequency band #3) and another two frequency bands (e.g., frequency band #1, frequency band #4).

It is understandable that there are multiple switching modes for switching from two frequency bands to another two frequency bands. Taking the switching from frequency band #1 and frequency band #2 to frequency band #3 and frequency band #4 as an example, the switching mode may be switching from frequency band #1 to frequency band #3 and switching from frequency band #2 to frequency band #4, or switching from frequency band #1 to frequency band #4 and switching from frequency band #2 to frequency band #3.

The maximum switching period required for switching from frequency band #1 and frequency band #2 to frequency band #3 and frequency band #4 may be a maximum value among switching periods required for all modes of switching from frequency band #1 and frequency band #2 to frequency band #3 and frequency band #4.

Certainly, in a case that the supported specific switching mode is switching between two frequency bands (e.g., frequency band #1, frequency band #3) and another two frequency bands (e.g., frequency band #2, frequency band #4), there are more switching modes including for example switching from frequency band #1 to frequency band #2 and switching from frequency band #3 to frequency band #4, switching from frequency band #1 to frequency band #4 and switching from frequency band #3 to frequency band #2, switching from frequency band #2 to frequency band #1 and switching from frequency band #4 to frequency band #3, or switching from frequency band #4 to frequency band #1 and switching from frequency band #2 to frequency band #3.

In example embodiments, the switching periods required for switching between two frequency bands (including switching from an original frequency band to another frequency band and switching from another frequency band to the original frequency band) may be the same. For example, the switching period required for switching from frequency band #1 to frequency band #3 and the switching period required for switching from frequency band #3 to frequency band #1 may be the same, and so on.

It should be noted that the above examples are only examples, and the capability indication information may also indicate that the terminal performs the uplink switching on 5 or more frequency bands, etc. The above is not limited in embodiments of the disclosure.

In some embodiments, the specific switching mode is also used for indicating that the switching occurs between a first frequency band group and a second frequency band group in four target frequency bands, the first frequency band group includes a first frequency band and a second frequency band, and the second frequency band group includes a third frequency band and a fourth frequency band.

In the embodiments of the disclosure, the specific switching mode also indicates that the switching occurs between the first frequency band group and the second frequency band group in the four target frequency bands, the first frequency band group includes the first frequency band and the second frequency band, and the second frequency band group includes the third frequency band and the fourth frequency band.

In some embodiments, in a case that a period required for switching between the first frequency band and the third frequency band is a first period, a period required for switching between the first frequency band and the fourth frequency band is a second period, a period required for switching between the second frequency band and the third frequency band is a third period, and a period required for switching between the second frequency band and the fourth frequency band is a fourth period, the maximum switching period corresponding to the specific switching mode is the maximum value among the first period, the second period, the third period and the fourth period.

In some embodiments, the capability indication information includes a bitmap.

In embodiments of the disclosure, the capability indication information includes a bitmap and bit(s) in the bitmap may indicate the specific switching mode supported by the terminal in performing the uplink switching on the at least four frequency bands and the maximum switching period corresponding to the specific switching mode.

Certainly, the bitmap may only indicate a specific switching mode supported by the terminal device in performing the uplink switching on the at least four frequency bands. Or the bitmap may only indicate the maximum switching period corresponding to a specific switching mode supported by the terminal, and so on.

In the embodiments of the disclosure, before reporting the capability indication information to the network side device, the terminal may reach an agreement with the network side device on the meaning of the bitmap of the capability indication information.

The bitmap may include one or more bits, and the one or more bits may each indicate the same meaning, or may respectively indicate different meanings.

In examples, a first bit indicates the specific switching mode supported by the terminal in performing the uplink switching on the at least four frequency bands and a second bit is used to indicate the maximum switching period corresponding to the specific switching mode.

In some embodiments, different bits of the bitmap correspond to different switching modes respectively.

In the embodiments of the disclosure, the bitmap may include multiple bits, and different bits correspond to different switching modes respectively.

In examples, when the terminal performs the uplink switching on the at least four frequency bands, the switching mode includes switching between two frequency bands of the at least four frequency bands and two frequency bands other than the two frequency bands of the at least four frequency bands, there are multiple switching modes, and each bit of the bitmap may correspond to one respective switching mode.

In some embodiments, in a case that the terminal performs the uplink switching on m frequency bands, the number of bits in the bitmap is $(C_{\mathrm{m}}^{2} * C_{m-2}^{2})/2$ .

In the embodiments of the disclosure, the terminal performs the uplink switching on m frequency bands, and the number of bits in the bitmap is $(C_{\mathrm{m}}^{2} * C_{m-2}^{2})/2$ .

In some embodiments, in a case that a value of a bit is a first value, it indicates that the terminal supports a specific switching mode corresponding to the bit and/or in a case that a value of a bit is a second value, it indicates that the terminal does not support a switching mode corresponding to the bit.

In the embodiments of the disclosure, in a case that a value of a bit is a first value, it indicates that the terminal supports a specific switching mode corresponding to the bit, and the first value may be "1".

In the embodiments of the disclosure, in a case that a value of a bit is a second value, it indicates that the terminal does not support a switching mode corresponding to the bit, and the second value may be "0".

In some embodiments, in a case that there are multiple specific switching modes, an order of the maximum switching periods corresponding to the specific switching modes is consistent with an order of bits corresponding to the specific switching modes.

In the embodiments of the disclosure, in a case that there are multiple specific switching modes, an order of the maximum switching periods corresponding to the specific switching modes is consistent with an order of the bits corresponding to the specific switching modes.

It should be noted that the above embodiments are not exhaustive but are only illustrations of some embodiments, and the above embodiments may be implemented individually or in combination. The above embodiments are only for illustration and are not intended to be specific limitations on the scope of protection of the embodiments of the disclosure.

By implementing the embodiments of the disclosure, the network side device receives the capability indication information reported by the terminal, in which the capability indication information is used for indicating the specific switching mode supported by the terminal in performing the uplink switching on the at least four frequency bands and the maximum switching period corresponding to the specific switching mode, the specific switching mode is used for indicating that the switching occurs between four target frequency bands in the at least four frequency bands, and there is no overlap between the four target frequency bands. Thus, the terminal may determine and report an accurate switching period, thereby avoiding performing data transmission and the uplink switching at the same time, to effectively avoid data transmission failure.

To facilitate understanding of the embodiments of the disclosure, the following example embodiments are provided. It should be understood that the example embodiments are only for illustration and are not intended to be specific limitations on the embodiments of the disclosure.

In an example embodiment, the terminal is capable of performing the uplink switching on m frequency bands, where m is an integer greater than or equal to 4. The terminal may report the capability indication information to the network side device (e.g., a base station) to indicate whether the uplink switching is supported, and the signaling format may be designed as follows.

Bitmap = (0,0,0,...,0). In a case that a value of a bit in the Bitmap is "1", it means that a corresponding combination supports the uplink switching. The size of the Bitmap may be determined by an array $(C_m^2 * C_{m-2}^2)/2$. For example, if m = 5, the size of the Bitmap is $(C_5^2 * C_3^2)/2 = 15$.

Taking 5 frequency bands (interchangeable with "band") as an example, the size of the Bitmap is $(C_5^2 * C_3^2)/2 = 15$. Assuming that the 5 uplink bands are arranged in a certain order, such as band#0, band#1, band#2, band#3, band#4, which are arranged in order of band number (from small to large). Then, the uplink switching may be indicated by a corresponding bit in the Bitmap. In an example,

a 0th bit in the Bitmap indicates: supporting the uplink switching between band#0/band#1 inter-band CA and band#2/band#3 inter-band CA;

a 1st bit in the Bitmap indicates: supporting the uplink switching between band#0/band#1 inter-band CA and band#2/band#4 inter-band CA;

a 2nd bit in the Bitmap indicates: supporting the uplink switching between band#0/band#1 inter-band CA and band#3/band#4 inter-band CA;

a 3rd bit in the Bitmap indicates: supporting the uplink switching between band#0/band#2 inter-band CA and band#1/band#3 inter-band CA;

a 4th bit in the Bitmap indicates: supporting the uplink switching between band#0/band#2 inter-band CA and band#1/band#4 inter-band CA;

a 5th bit in the Bitmap indicates: supporting the uplink switching between band#0/band#2 inter-band CA and band#3/band#4 inter-band CA;

a 6th bit in the Bitmap indicates: supporting the uplink switching between band#0/band#3 inter-band CA and band#1/band#2 inter-band CA;

a 7th bit in the Bitmap indicates: supporting the uplink switching between band#0/band#3 inter-band CA and band#1/band#4 inter-band CA;

an 8th bit in the Bitmap indicates: supporting the uplink switching between band#0/band#3 inter-band CA and band#2/band#4 inter-band CA;

a 9th bit in the Bitmap indicates: supporting the uplink switching between band#0/band#4 inter-band CA and band#1/band#2 inter-band CA;

a 10th bit in the Bitmap indicates: supporting the uplink switching between band#0/band#4 inter-band CA and band#1/band#3 inter-band CA;

an 11th bit in the Bitmap indicates: supporting the uplink switching between band#0/band#4 inter-band CA and band#2/band#3 inter-band CA;

a 12th bit in the Bitmap indicates: supporting the uplink switching between band#1/band#2 inter-band CA and band#3/band#4 inter-band CA;

a 13th bit in the Bitmap indicates: supporting the uplink switching between band#1/band#3 inter-band CA and band#2/band#4 inter-band CA;

a 14th bit in the Bitmap indicates: supporting the uplink switching between band#1/band#4 inter-band CA and band#2/band#3 inter-band CA.

In examples, the reported capability may also include the supported maximum switching period in the following format:

generally, the switching period is defined for a band pair on a link, such as the switching between inter-band CA and inter-band CA (such as CA_A-B<->CA_C-D). Possible switching scenarios include A<->C, B<->D or A<->D, B<->C, and the switching periods reported for each band pair may be different, e.g., 35us for A<->C, 140us for B<->D, 140us for A<->D, and 210us for B<->C. In this case, the maximum value of the switching periods of all possible band pairs for the two inter-band CAs may be defined as a period in which an interfered link does not perform the transmission (including the switching period of the interfered link itself):

$$Tmax = Max(T_{A-C}, T_{B-D}, T_{A-D}, T_{B-C});$$

where $T_{A-C}$ denotes the switching period of the band pair between A and C, $T_{B-D}$ denotes the switching period of the band pair between B and D, $T_{A-D}$ denotes the switching period of the band pair between A and D, and $T_{B-C}$ denotes the switching period of the band pair between B and C.

It is assumed that the terminal performs the uplink switching on m frequency bands, where m is an integer greater than or equal to 4. If the reported capability indication information indicates that there are n digits being 1 in the Bitmap indicating the uplink switching capability, then n maximum switching periods are reported. Each of the n maximum switching periods takes the maximum value among the switching periods of all possible band pairs of corresponding two inter-band CAs and an order of the n maximum switching periods is consistent with the above frequency band combination indication order. The signaling format of the switching periods may be designed as (T1, T2, ..., Tn-1), where each element is the maximum switching period of the corresponding switching combination.

In examples, taking 5 bands as an example, if the Bitmap for reporting the uplink switching capability is (1,0,0,1,1,0,0,0,0,1,0,0,0,1,0), it means that the following band combinations support the uplink switching:

the uplink switching between band#0/band#1 inter-band CA and band#2/band#3 inter-band CA;
the uplink switching between band#0/band#2 inter-band CA and band#1/band#3 inter-band CA;
the uplink switching between band#0/band#2 inter-band CA and band#1/band#4 inter-band CA;
the uplink switching between band#0/band#4 inter-band CA and band#1/band#2 inter-band CA; and
the uplink switching between band#1/band#3 inter-band CA and band#2/band#4 inter-band CA.

In examples, the reported switching period is $(T_1, T_2, T_3, T_4, T_5)$, where $T_1$ denotes the maximum switching period for the uplink switching between band#0/band#1 inter-band CA and band#2/band#3 inter-band CA, $T_2$ denotes the maximum switching period for the uplink switching between band#0/band#2 inter-band CA and band#1/band#3 inter-band CA, $T_3$ denotes the maximum switching period for the uplink switching between band#0/band#2 inter-band CA and band#1/band#4 inter-band CA, $T_4$ denotes the maximum switching period for the uplink switching between band#0/band#4 inter-band CA and band#1/band#2 inter-band CA, and $T_5$ denotes the maximum switching period for the uplink switching between band#1/band#3 inter-band CA and band#2/band#4 inter-band.

In the embodiments of the disclosure, when the terminal performs the uplink switching on four or more frequency bands and the uplink switching is performed between an inter-band CA and another inter-band CA (there is no overlapped frequency bands), the maximum value among the switching periods of all possible band pairs of the two inter-band CAs is reported as the period when the interfered link does not perform the transmission (including the switching period of the interfered link itself), thereby effectively avoiding the interference between links caused by the switching. In the two inter-band CA switching scenarios, the maximum value among the switching periods of all band pairs is selected as the period when the interfered link does not perform the transmission (including the switching period of the interfered link itself), thereby effectively avoiding the potential interference between links caused by the switching.

In the above-mentioned embodiments according to the disclosure, the methods according to the embodiments of the disclosure are introduced from the perspectives of the network side device and the terminal respectively.

FIG. 8 is a schematic diagram illustrating a structure of a communication device 1 according to an embodiment of the disclosure. The communication device 1 illustrated in FIG. 8 may include a transceiver module 11 and a processing module. The transceiver module may include a sending module and/or a receiving module. The sending module is configured to implement a sending function, the receiving module is configured to implement a receiving function, and the transceiver module may implement the sending function and/or the receiving function.

The communication device 1 may be a terminal, a device in a terminal, or a device that may be used in conjunction with a terminal. In some examples, the communication device 1 may be a network side device, a device in a network side device, or a device that may be used in conjunction with a network side device.

The communication device 1 is configured on the terminal side.

The device includes: a transceiver module 11.

The transceiver module 11 is configured to report capability indication information to the network side device, in which the capability indication information is used for indicating a maximum switching period for the terminal in performing an uplink switching using a specific switching mode, there are multiple switching schemes for the specific switching mode, and the maximum switching period is a maximum value among switching periods required for the multiple switching schemes.

In some embodiments, the specific switching mode is a switching mode supported by the terminal in performing the uplink switching on multiple frequency bands.

In some embodiments, in the specific switching mode, a switching occurs between multiple target frequency bands in multiple frequency bands, and there is no overlap between the multiple target frequency bands.

In some embodiments, in the specific switching manner, a switching occurs between a first frequency band group and a second frequency band group in multiple target frequency bands, and the first frequency band group and the second frequency band group respectively include more than one target frequency band.

In some embodiments, in the specific switching mode, a switching occurs between four target frequency bands in the multiple frequency bands, and there is no overlap between the four target frequency bands.

In some embodiments, in the specific switching mode, a switching occurs between a first frequency band group and a second frequency band group in four target frequency bands, the first frequency band group includes a first frequency band and a second frequency band, and the second frequency band group includes a third frequency band and a fourth frequency band.

In some embodiments, in a case that a period required for switching between the first frequency band and the third frequency band is a first period, a period required for switching between the first frequency band and the fourth frequency band is a second period, a period required for switching between the second frequency band and the third frequency band is a third period, and a period required for switching between the second frequency band and the fourth frequency band is a fourth period, the maximum switching period corresponding to the specific switching mode is a maximum value among the first period, the second period, the third period and the fourth period.

In some embodiments, the capability indication information includes a bitmap.

In some embodiments, different bits of the bitmap correspond to different switching modes.

In some embodiments, in a case that the terminal performs the uplink switching on m frequency bands, the number of bits in the bitmap is $(C_{\mathrm{m}}^2 * C_{m-2}^2)/2$ .

In some embodiments, in a case that a value of a bit is a first value, it indicates that the terminal supports a specific switching mode corresponding to the bit; and/or in a case that a value of a bit is a second value, it indicates that the terminal does not support the switching mode corresponding to the bit.

In some embodiments, in a case that there are multiple specific switching modes, an order of the maximum switching periods corresponding to the specific switching modes is consistent with an order of the bits corresponding to the specific switching modes.

The communication device 1 is configured on a side of the network side device.

The device includes: a transceiver module 11.

The transceiver module 11 is configured to receive capability indication information reported by a terminal, in which the capability indication information is used for indicating a maximum switching period for the terminal in performing an uplink switching using a specific switching mode, there are multiple switching schemes for the specific switching mode, and the maximum switching period is a maximum value among switching periods required for the multiple switching schemes.

In some embodiments, the specific switching mode is a switching mode supported by the terminal device when performing uplink switching on multiple frequency bands.

In some embodiments, in the specific switching mode, a switching occurs between multiple target frequency bands in multiple frequency bands, and there is no overlap between the multiple target frequency bands.

In some embodiments, in the specific switching manner, a switching occurs between a first frequency band group and a second frequency band group in the multiple target frequency bands, and the first frequency band group and the second frequency band group respectively include more than one target frequency band.

In some embodiments, in the specific switching mode, a switching occurs between four target frequency bands in the multiple frequency bands, and there is no overlap between the four target frequency bands.

In some embodiments, in the specific switching manner, a switching occurs between a first frequency band group and a second frequency band group in the four target frequency bands, the first frequency band group includes a first frequency band and a second frequency band, and the second frequency band group includes a third frequency band and a fourth frequency band.

In some embodiments, in a case that a period required for switching between the first frequency band and the third frequency band is a first period, a period required for switching between the first frequency band and the fourth frequency band is a second period, a period required for switching between the second frequency band and the third frequency band is a third period, and a period required for switching between the second frequency band and the fourth frequency band is a fourth period, the maximum switching period corresponding to the specific switching mode is a maximum value among the first period, the second period, the third period and the fourth period.

In some embodiments, the capability indication information includes a bitmap.

In some embodiments, different bits of the bitmap correspond to different switching modes respectively.

In some embodiments, in a case that the terminal performs the uplink switching on m frequency bands, the number of bits in the bitmap is $(C_{m}^{2} * C_{m-2}^{2}) / 2$ .

In some embodiments, in a case that a value of a bit is a first value, it indicates that the terminal supports a specific switching mode corresponding to the bit; and/or in a case that a value of a bit is a second value, it indicates that the terminal does not support a switching mode corresponding to the bit.

In some embodiments, in a case that there are multiple specific switching modes, an order of the maximum switching period corresponding to the specific switching modes is consistent with an order of the bits corresponding to the specific switching modes.

Regarding the communication device 1 in the above embodiments, the specific manner in which each module performs operations has been described in detail in the embodiments of the methods, and will not be elaborated here.

The communication device 1 according to the above embodiments of the disclosure achieves the same or similar beneficial effects as the capability reporting methods according to some of the above embodiments, which will not be described in detail here.

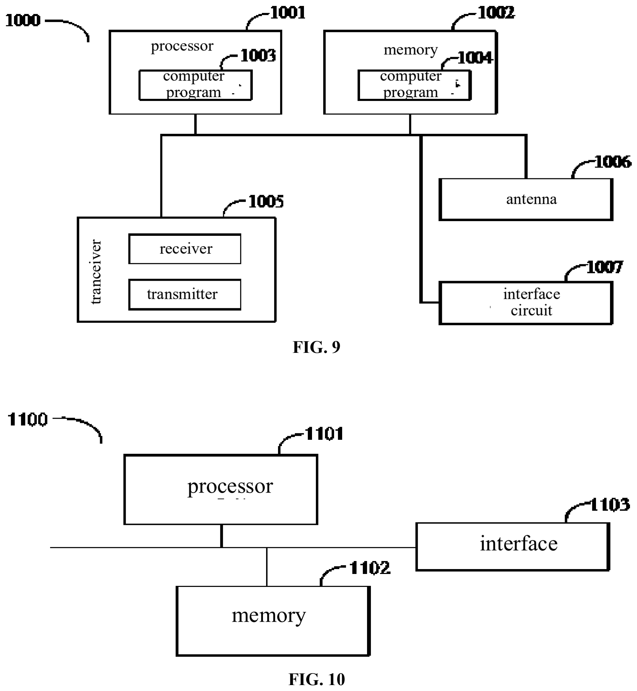

FIG. 9 is a schematic diagram illustrating a structure of another communication device 1000 according to an embodiment of the disclosure. The communication device 1000 may be a terminal, be a network side device, be a chip, a chip system or a processor that supports the terminal to implement the above methods, or be a chip, a chip system or a processor that supports the network side device to implement the above methods. The communication device 1000 may be configured to implement the methods described in the above method embodiments, and the details may be referred to the description in the above method embodiments.

The communication device 1000 may include one or more processors 1001. The processor 1001 may be a general-purpose processor or a dedicated processor, etc. For example, it may be a baseband processor or a central processing unit. The baseband processor may be configured to process the communication protocol and the communication data, and the central processing unit may be configured to control the communication device (such as a network side device, a baseband chip, a terminal, a terminal chip, a DU or a CU, etc.), execute a computer program, and process the data of the computer program.

In examples, the communication device 1000 may further include one or more memories 1002, on which a computer program 1004 may be stored, and the memory 1002 executes the computer program 1004 to enable the communication device 1000 to perform the methods described in the above method embodiments. In examples, data may also be stored in the memory 1002. The communication device 1000 and the memory 1002 may be provided separately or integrated together.

In examples, the communication device 1000 may further include a transceiver 1005 and an antenna 1006. The transceiver 1005 may be referred to as a transceiver unit, a transceiver machine, or a transceiver circuit, etc., for implementing a transceiver function. The transceiver 1005 may include a receiver and a transmitter, the receiver may be referred to as a receiver machine or a receiving circuit, etc., for implementing a receiving function. The transmitter may be referred to as a transmitter machine or a transmitting circuit, etc., for implementing a transmitting function.

In examples, the communication device 1000 may further include one or more interface circuits 1007. The interface circuit 1007 is configured to receive code instructions and transmit the code instructions to the processor 1001. The processor 1001 runs the code instructions to enable the communication device 1000 to perform the methods described in the above method embodiments.

In a case that the communication device 1000 is a network side device, the transceiver 1005 is configured to perform S41 in FIG. 4 and S51 in FIG. 5.

In a case that the communication device 1000 is a terminal, the transceiver 1005 is configured to perform S61 in FIG. 6 and S71 in FIG. 7.

In one implementation, the processor 1001 may include a transceiver for implementing receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface, or interface circuit may be used for reading and writing code/data, or the above-mentioned transceiver circuit, interface, or interface circuit may be used for transmitting or delivering signals.

In one implementation, the processor 1001 may store a computer program 1003, which runs on the processor 1001 and enables the communication device 1000 to perform the methods described in the above method embodiments. The computer program 1003 may be fixed in the processor 1001, in which case the processor 1001 may be implemented by hardware.

In one implementation, the communication device 1000 may include a circuit that may implement the functions of sending or receiving or communicating in the aforementioned method embodiments. The processor and transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a terminal or a network side device, but the scope of the communication device described in the disclosure is not limited thereto, and the structure of the communication device may not be limited by FIG. 9. The communication device may be an independent device or may be part of a larger device. For example, the communication device may be:

(1) a stand-alone integrated circuit (IC), or a chip, or a system on chip or a subsystem;

(2) a set of one or more ICs, for example, which may include a storage component for storing data and a computer program;

(3) an ASIC, such as a Modem;

(4) a module that may be embedded within other devices;

(5) a receiver, a terminal, a smart terminal, a cellular phone, a wireless device, a handset, a mobile unit, an on-vehicle device, a network side device, a cloud device, an artificial intelligence device, etc.; and

(6) others, and so forth.

For the case where the communication device may be a chip or a chip system, FIG. 10 is a structural diagram illustrating a chip according to an embodiment of the disclosure.

The chip 1100 includes a processor 1101 and an interface 1103. The number of the processor 1101 may be one or more, and the number of the interface 1103 may be multiple.

For the case where the chip is used to implement the functions of the terminal in the embodiments of the disclosure:

the interface 1103 is configured to receive code instructions and transmit the code instructions to the processor.

The processor 1101 is configured to run the code instructions to perform the capability reporting method as described in some of the above embodiments.

For the case where the chip is used to implement the functions of the network side device in the embodiment of the disclosure:

the interface 1103 is configured to receive code instructions and transmit the code instructions to the processor.

The processor 1101 is configured to run code instructions to perform the capability reporting method as described in some of the above embodiments.

In examples, the chip 1100 further includes a memory 1102, and the memory 1102 is configured to store necessary computer programs and data.

Those skilled in the related art may understand that, various illustrative logical blocks and steps listed in embodiments of the disclosure, may be implemented by electronic hardware, computer software or a combination of the electronic hardware and the computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

Embodiments of the disclosure also provides a capability reporting system. The system includes a communication device acting as a terminal and a communication device acting as a network side device in the afore-mentioned embodiments of FIG. 8. Or the system includes a communication device acting as a terminal and a communication device acting as a network side device in the afore-mentioned embodiments of FIG. 9.

A readable storage medium with instructions stored thereon is further provided in the disclosure. When the instructions are executed by a computer, functions of any method embodiment are implemented.

A computer program product is further provided in the disclosure. The computer program product implements functions of any method embodiment when executed by a processor.

In the above embodiments, the functions may be wholly or partially implemented by software, hardware, firmware, or any combination thereof. When implemented by the software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general-purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are used to distinguish features merely for convenience of description and are not intended to limit the scope of embodiments of the disclosure. Further, they are also used to indicate an order of precedence.

At least one in the disclosure may also be described as one or more, and a plurality of may be two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Depending on the context, the words "if" used here may be interpreted as "when" or "at the time of" or "in response to determining".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, prestored, pre-negotiated, pre-configured, solidified or pre-fired.

Those skilled in the related art may realize that, in combination with units and algorithm steps of the examples described in embodiments of the disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Therefore, the protection scope of the disclosure shall be subject to the protection scope of claims.

**Claims**

1. A capability reporting method, performed by a terminal, the method comprising:
   reporting capability indication information to a network side device, wherein the capability indication information is used for indicating a maximum switching period for the terminal in performing an uplink switching using a specific switching mode, there are a plurality of switching schemes for the specific switching mode, and the maximum switching period is a maximum value among switching periods required for the plurality of switching schemes.

2. The method of claim 1, wherein the specific switching mode is a switching mode supported by the terminal in performing the uplink switching on a plurality of frequency bands.

3. The method of claim 1 or 2, wherein in the specific switching mode, a switching occurs between a plurality of target frequency bands in a plurality of frequency bands, and there is no overlap between the plurality of target frequency bands.

4. The method of claim 3, wherein in the specific switching mode, the switching occurs between a first frequency band group and a second frequency band group in the plurality of target frequency bands, and the first frequency band group and the second frequency band group respectively comprise more than one target frequency band.

5. The method of claim 1 or 2, wherein in the specific switching mode, a switching occurs between four target frequency bands in a plurality of frequency bands, and there is no overlap between the four target frequency bands.

6. The method of claim 5, wherein in the specific switching mode, the switching occurs between a first frequency band group and a second frequency band group in the four target frequency bands, the first frequency band group comprises a first frequency band and a second frequency band, and the second frequency band group comprises a third frequency band and a fourth frequency band.

7. The method of claim 6, wherein in a case that a period required for switching between the first frequency band and the third frequency band is a first period, a period required for switching between the first frequency band and the fourth frequency band is a second period, a period required for switching between the second frequency band and the third frequency band is a third period, and a time required for switching between the second frequency band and the fourth frequency band is a fourth period, the maximum switching period corresponding to the specific switching mode is a maximum value among the first period, the second period, the third period and the fourth period.

8. The method of any one of claims 1 to 7, wherein the capability indication information comprises a bitmap.

9. The method of claim 8, wherein different bits in the bitmap correspond to different switching modes respectively.

10. The method of claim 8 or 9, wherein in a case that the terminal performs the uplink switching on m frequency bands, a number of bits in the bitmap is $(C_{\mathrm{m}}^2 * C_{m-2}^2)/2$ .

11. The method of claim 9 or 10, wherein in a case that a value of a bit is a first value, it indicates that the terminal supports a specific switching mode corresponding to the bit; and/or in a case that a value of a bit is a second value, it indicates that the terminal does not support a switching mode corresponding to the bit.

12. The method of any one of claims 9 to 11, wherein in a case that there are a plurality of specific switching modes, an order of the maximum switching periods corresponding to the plurality of specific switching modes is consistent with an order of bits corresponding to the plurality of specific switching modes.

13. A capability reporting method, performed by a network side device, the method comprising:
receiving capability indication information reported by a terminal, wherein the capability indication information is used for indicating a maximum switching period for the terminal in performing an uplink switching using a specific switching mode, there are a plurality of switching schemes for the specific switching mode, and the maximum switching period is a maximum value among switching periods required for the plurality of switching schemes.

14. The method of claim 13, wherein the specific switching mode is a switching mode supported by the terminal in performing the uplink switching on a plurality of frequency bands.

15. The method of claim 13 or 14, wherein in the specific switching mode, a switching occurs between a plurality of target frequency bands in a plurality of frequency bands, and there is no overlap between the plurality of target frequency bands.

16. The method of claim 15, wherein in the specific switching mode, the switching occurs between a first frequency band group and a second frequency band group in the plurality of target frequency bands, and the first frequency band group and the second frequency band group respectively comprise more than one target frequency band.

17. The method of claim 13 or 14, wherein in the specific switching mode, a switching occurs between four target frequency bands in a plurality of frequency bands, and there is no overlap between the four target frequency bands.

18. The method of claim 17, wherein in the specific switching mode, the switching occurs between a first frequency band group and a second frequency band group in the four target frequency bands, the first frequency band group comprises a first frequency band and a second frequency band, and the second frequency band group comprises a third frequency band and a fourth frequency band.

**19.** The method of claim 18, wherein in a case that a period required for switching between the first frequency band and the third frequency band is a first period, a period required for switching between the first frequency band and the fourth frequency band is a second period, a period required for switching between the second frequency band and the third frequency band is a third period, and a period required for switching between the second frequency band and the fourth frequency band is a fourth period, the maximum switching period corresponding to the specific switching mode is a maximum value among the first period, the second period, the third period and the fourth period.

**20.** The method of any one of claims 13 to 19, wherein the capability indication information comprises a bitmap.

**21.** The method of claim 20, wherein different bits in the bitmap correspond to different switching modes respectively.

**22.** The method of claim 20 or 21, wherein in a case that the terminal performs the uplink switching on m frequency bands, a number of bits in the bitmap is $(C_{\mathrm{m}}^2 * C_{m-2}^2)/2$ .

**23.** The method of claim 17 or 22, wherein in a case that a value of a bit is a first value, it indicates that the terminal supports a specific switching mode corresponding to the bit; and/or in a case that a value of a bit is a second value, it indicates that the terminal does not support a switching mode corresponding to the bit.

**24.** The method of any one of claims 17 to 23, wherein in a case that there are a plurality of specific switching modes, an order of the maximum switching periods corresponding to the plurality of specific switching modes is consistent with an order of bits corresponding to the plurality of specific switching modes.

**25.** A communication device, comprising:
a transceiver module, configured to report capability indication information to a network side device, wherein the capability indication information is used for indicating a maximum switching period for a terminal in performing an uplink switching using a specific switching mode, there are multiple switching schemes for the specific switching mode, and the maximum switching period is a maximum value among switching periods required for the plurality of switching schemes.

**26.** A communication device, comprising:
a transceiver module, configured to receive capability indication information reported by a terminal, wherein the capability indication information is used for indicating a maximum switching period for a terminal in performing an uplink switching using a specific switching mode, there are a plurality of switching schemes for the specific switching mode, and the maximum switching period is a maximum value among switching periods required for the plurality of switching schemes.

**27.** A communication device, comprising a processor and a memory, wherein the memory stores a computer program, and the processor executes the computer program stored in the memory to enable the device to perform the method of any one of claims 1 to 12, or the processor executes the computer program stored in the memory to enable the device to perform the method of any one of claims 13 to 24.

**28.** A communication device, comprising: a processor and an interface circuit,

wherein the interface circuit is configured to receive code instructions and transmit the code instructions to the processor; and
the processor is configured to run the code instructions to perform the method of any one of claims 1 to 12 or is configured to run the code instructions to perform the method of any one of claims 13 to 24.

**29.** A computer-readable storage medium for storing instructions, which, when executed, enable the method of any one of claims 1 to 12 to be implemented, or, when executed, enable the method of any one of claims 13 to 24 to be implemented.

10

communication system

101

network side device

102

terminal

**FIG. 1**

Carrier #1
Carrier #2

Case 1: 1T+0T

Tx switching for SUL and UL CA

Carrier #1
Carrier #2

Case 2: 1T+1T

Carrier #2
Carrier #2

Case 3: 0T+2T

**FIG. 2**

Carrier #1
Carrier #2

Case 1: 1T+1T

Tx switching for SUL and UL CA

Carrier #1
Carrier #1

Case 2: 2T+0T

Carrier #2
Carrier #2

Case 3: 0T+2T

Carrier #1
Carrier #2/#3

Case 1: 1T+1T

Tx switching for SUL and UL CA

Carrier #1
Carrier #1

Case 2: 2T+0T

Carrier #2/#3
Carrier #2/#3

Case 3: 0T+2T

**FIG. 3**

report capability indication information to a network side device, in which the capability indication information is used for indicating a maximum switching period for the terminal in performing an uplink switching using a specific switching mode, there are a plurality of switching schemes for the specific switching mode, and the maximum switching period is a maximum value among switching periods required for the plurality of switching schemes

S41

**FIG. 4**

report capability indication information to a network side device, in which the capability indication information is used for indicating a specific switching mode supported by a terminal in performing an uplink switching on at least four frequency bands and a maximum switching period corresponding to the specific switching mode, the specific switching mode is used for indicating a switching occurs between four target frequency bands in the at least four frequency bands, there is no overlap between the four target frequency bands

S51

**FIG. 5**

receive capability indication information reported by a terminal, in which the capability indication information is used for indicating a maximum switching period for the terminal in performing an uplink switching using a specific switching mode, there are a plurality of switching schemes for the specific switching mode, and the maximum switching period is a maximum value among switching periods required for the plurality of switching schemes

S61

**FIG. 6**

receive capability indication information reported by a terminal, in which the capability indication information is used for indicating a specific switching mode supported by a terminal in performing an uplink switching on at least four frequency bands and a maximum switching period corresponding to the specific switching mode, the specific switching mode is used for indicating a switching occurs between four target frequency bands in the at least four frequency bands, there is no overlap between the four target frequency bands

S71

**FIG. 7**

1

communication device

11

transceiver module

**FIG. 8**

1000 —

processor 1001

computer program 1003

memory 1002

computer program 1004

antenna 1006

receiver

transmitter

tranceiver 1005

interface circuit 1007

**FIG. 9**

1100 —

processor 1101

interface 1103

memory 1102

**FIG. 10**

## INTERNATIONAL SEARCH REPORT

International application No.

**PCT/CN2023/071059**

### A.    CLASSIFICATION OF SUBJECT MATTER

H04W8/24(2009.01)i

According to International Patent Classification (IPC) or to both national classification and IPC

### B.    FIELDS SEARCHED

Minimum documentation searched (classification system followed by classification symbols)

IPC:H04W,H04B,H04Q

Documentation searched other than minimum documentation to the extent that such documents are included in the fields searched

Electronic data base consulted during the international search (name of data base and, where practicable, search terms used)

CNTXT; WPABS; ENTXT; CJFD; DWPI; 3GPP; VEN; CNKI: 上行链路切换, 超级上行, 切换时间, 最大, 最大切换时间, 能力信息, 切换频段对, uplink switch, uplink Tx switching, switching time, maximum, maximum switching time, UE capability, band pairs, largest, max, SRS

### C.    DOCUMENTS CONSIDERED TO BE RELEVANT

| Category* | Citation of document, with indication, where appropriate, of the relevant passages | Relevant to claim No. |
|---|---|---|
| Y | CN 115250463 A (CHINA TELECOM CORP., LTD.) 28 October 2022 (2022-10-28) description, paragraphs 31-88 | 1-7, 13-19, 25-29 |
| Y | Huawei, Hisilicon. "R2-1818016 "Email discussion report on SRS switching capability"" *3GPP tsg_ran\wg2_rl2*, No. tsgr2_104, 02 November 2018 (2018-11-02), document, section 2.2 | 1-7, 13-19, 25-29 |
| Y | CN 115150815 A (CHINA TELECOM CORP., LTD.) 04 October 2022 (2022-10-04) description, paragraphs 34-74 | 1-7, 13-19, 25-29 |
| A | CN 113784339 A (HUAWEI TECHNOLOGIES CO., LTD.) 10 December 2021 (2021-12-10) entire document | 1-29 |

☐ Further documents are listed in the continuation of Box C.　　☑ See patent family annex.

| | |
|---|---|
| *　　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **06 September 2023** | **18 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| PCT/CN2023/071059 |

| Patent document cited in search report | | | Publication date (day/month/year) | Patent family member(s) | Publication date (day/month/year) |
|---|---|---|---|---|---|
| CN | 115250463 | A | 28 October 2022 | None | |
| CN | 115150815 | A | 04 October 2022 | None | |
| CN | 113784339 | A | 10 December 2021 | None | |

Form PCT/ISA/210 (patent family annex) (July 2022)